# EUROPÄISCHE PATENTSCHRIFT

(11) **EP 4 360 416 B1**
(45) Veröffentlichungstag und Bekanntmachung des Hinweises auf die Patenterteilung: **17.09.2025**
(21) Anmeldenummer: 23206474.1
(22) Anmeldetag: 27.10.2023
(51) Int. Cl.: A01B 59/00, A01B 71/06, A01B 59/06

(54) **VORRICHTUNG ZUM ANTRIEB ZUMINDEST EINES ANBAUGERÄTS**
DEVICE FOR DRIVING AT LEAST ONE ATTACHMENT
DISPOSITIF D'ENTRAÎNEMENT D'AU MOINS UN APPAREIL ATTELÉ

(30) Priorität: 28.10.2022 AT 508322022
(43) Veröffentlichungstag der Anmeldung: 01.05.2024
(73) Patentinhaber: Technologie Holding GmbH, 4906 Eberschwang (AT)
(72) Erfinder: DONNERMAIR, Maximilian, 4906 Eberschwang (AT); DONNERMAIR, Moritz, 4906 Eberschwang (AT); MAIER, Franz Xaver, 4906 Eberschwang (AT)
(74) Vertreter: Jell, Friedrich

(56) Entgegenhaltungen:
- EP-A1- 1 260 129
- CN-Y- 201 341 308
- DE-U1- 20 005 554
- US-A- 5 090 268
- US-A1- 2018 319 268
- US-A1- 2020 269 687
- ANONYMOUS, 5 December 2017 (2017-12-05), XP002811208, Retrieved from the Internet <URL:https://www.landwirt.com/en/used-farm-machinery,1385210,Dominator-Dreipunktadapter-mit-Zapfwelle-hydraulisch.html> [retrieved on 20240313]

## Beschreibung

Die Erfindung betrifft eine Vorrichtung zum Antrieb zumindest eines Anbaugeräts an einem, einen hydraulischen Arbeitskreis aufweisenden Arbeitsgerät, insbesondere Arbeitsfahrzeug, mit einer ersten und zweiten mechanischen Anbauschnittstelle, wobei die erste Anbauschnittstelle zum Ankoppeln mit dem Arbeitsgerät und die zweite Anbauschnittstelle zum Ankoppeln mit dem Anbaugerät ausgebildet sind, mit einem Hydraulikantrieb, der an den Antriebskreis des Arbeitsgeräts anschließbar ist, und mit einer vom Hydraulikantrieb angetrieben Zapfwelle zum Antrieb des Anbaugeräts.

Bei Hofladern als Arbeitsfahrzeugen und damit bei einem Arbeitsgerät ist es bekannt, eine Vorrichtung vorzusehen, die eine Zapfwelle zum Antrieb eines Anbaugeräts aufweist (vgl. XP002811208: Dominator Dreipunktadapter mit Zapfwelle hydraulisch oder vgl. DE20005554U1). Zum Koppeln der Vorrichtung weist diese eine erste und eine zweite mechanische Anbauschnittstelle auf, wobei die erste Anbauschnittstelle zum Ankoppeln mit dem Arbeitsfahrzeug und die zweite Anbauschnittstelle zum Ankoppeln mit dem Anbaugerät ausgebildet sind. Die Anbauschnittstellen sind an einem dreieckigen Gestell befestigt. Die Zapfwelle wird von einem Hydraulikantrieb der Vorrichtung angetrieben, wobei dieser Hydraulikantrieb an den Antriebskreis des Arbeitsfahrzeugs angeschlossen und mittig im Gestell aufgehängt ist. Diese Vorrichtung erweiterte zwar den Funktionsumfang eines Hofladers, kann jedoch für andere Anbaugeräte nicht eingesetzt werden, die keinen Zapfwelleneingang aufweisen. Zudem schränkt die mechanische Belastungsfähigkeit der Zapfwelle die Flexibilität der Vorrichtung ein - beispielsweise sind Zapfwellen zum Direktantrieb von Anbaugeräten nicht geeignet.

Die Erfindung hat sich daher die Aufgabe gestellt, eine Vorrichtung der eingangs geschilderten Art derart konstruktiv zu verändern, dass diese flexible einsetzbar ist und verschiedenste Anbaugeräte antreiben kann.

Die Erfindung löst die gestellte Aufgabe durch die Merkmale des Anspruchs 1.

Indem die Vorrichtung ein Verteilergetriebe aufweist, das ein Getriebegehäuse, eine Eingangswelle, eine erste Abtriebswelle, eine zweite Abtriebswelle und mindestens eine im Getriebegehäuse gelagerte Getriebestufe zwischen der Eingangswelle und den beiden Abtriebswellen aufweist, wobei der Hydraulikantrieb mit der Eingangswelle des Verteilergetriebes zu deren Antrieb verbunden ist, kann eine Möglichkeit zum Antrieb verschiedenster Anbaugeräte mit einem Hydraulikantrieb geschaffen werden. Hierfür sind die erste Abtriebswelle als Zapfwelle und die zweite Abtriebswelle zum Direktantrieb ausgebildet, sodass die Vorrichtung flexibel verschiedenste Anbaugeräte antreiben kann. Hierbei kann es sich neben Standardanbaugeräten auch um direktangetriebene Anbaugeräte handeln, die mit einer vergleichsweise hohen mechanischen Belastung auf den Antriebsstrang wirken können, wofür die zweite Abtriebswelle vorgesehen ist.

Sind die erste und zweite mechanische Anbauschnittstelle am Getriebegehäuse vorgesehen, kann eine standfeste und kompakte Vorrichtung geschaffen werden, die insbesondere das Anbaugerät nahe am Arbeitsgerät befestigen kann. Vorzugsweise liegen sich die erste und zweite mechanische Anbauschnittstelle am Getriebegehäuse gegenüber, was die Handhabbarkeit der Vorrichtung weiter erleichtern kann.

Vorzugsweise weist die zweite Abtriebswelle einen Abtriebsflansch auf, um beispielsweise einen Direktantrieb für ein Anbaugerät zu ermöglichen. Insbesondere kann sich auch ein Abtriebsflansch für einen multifunktionalen Antrieb von verschiedensten Anbaugeräten eignen.

Entsprechend einer gewünschten Drehzahl an den Abtriebswellen, kann vorgesehen sein, dass ein erstes Übersetzungsverhältnis zwischen Eingangswelle und erster Abtriebswelle unterschiedlich zu einem zweiten Übersetzungsverhältnis zwischen Eingangswelle und zweiter Abtriebswelle ist.

Beispielsweise können gewünschte Übersetzungen auf konstruktiv einfache Weise ermöglicht werden, indem das Getriebe zwei Getriebestufen aufweist, wobei die erste Abtriebswelle über die erste Getriebestufe unmittelbar und die zweite Abtriebswelle über die zweite Getriebestufe unmittelbar angetrieben werden.

Die Konstruktion am Verteilergetriebe ist weiter vereinfachbar, wenn die erste Getriebestufe ein Kegelradgetriebe und/oder die zweite Getriebestufe ein Zahnradgetriebe sind oder ist.

Hinsichtlich der zu vereinfachenden Konstruktion am Verteilergetriebe ist dies umso mehr zutreffend, wenn sich ein Eingangszahnrad des Zahnradgetriebes auf einer ersten Ausgangswelle des Kegelradgetriebes befindet.

Besonders hohe mechanische Belastbarkeit kann erreicht werden, wenn beispielsweise ein Ritzel der als Ritzelwelle ausgeführten ersten Ausgangswelle das Eingangszahnrad ausbildet.

Die Konstruktion im Bereich der zweiten Abtriebswelle ist weiter vereinfachbar, wenn ein Ausgangszahnrad des Zahnradgetriebes auf einer zweiten Ausgangswelle befestigt ist, die an einem, insbesondere freien, Ende den Abtriebsflansch der zweiten Abtriebswelle aufweist.

Weist das Getriebegehäuse zwei miteinander verbundene Gehäuseteile auf, können eine vergleichsweise hohe mechanische Belastbarkeit erreicht und in weiterer Folge Anbauschnittstellen standfest getragen werden.

Weist das Getriebegehäuse an ihrem Mantel, insbesondere parallel verlaufende, Versteifungsrippen, auf, kann dies die mechanische Standfestigkeit der Vorrichtung weiter erhöhen.

Vorzugsweise weist das Getriebegehäuse an ihren Stirnseiten mit den Anbauschnittstellen jeweils eine Platte auf, um das Koppeln mit dem Arbeitsgerät und mit dem Anbaugerät zu erleichtern.

Die erfindungsgemäße Vorrichtung zum Antrieb zumindest eines Anbaugeräts kann sich für ein Arbeitsgerät, beispielsweise Arbeitsfahrzeug, besonders eignen.

In den Figuren ist beispielsweise der Erfindungsgegenstand anhand einer Ausführungsvariante näher dargestellt. Es zeigen
- Fig. 1: eine Seitenansicht auf ein Arbeitsgerät mit einer Vorrichtung und einem Anbaugerät,

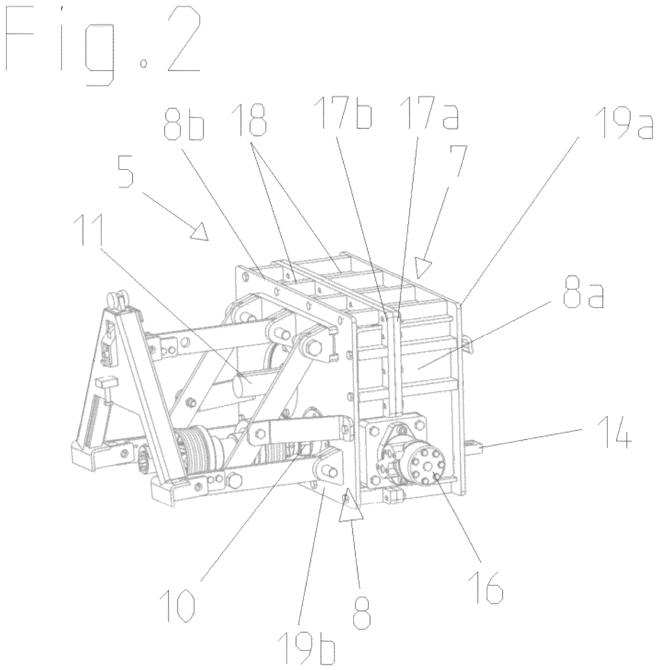

- Fig. 2: eine dreidimensionale Ansicht auf die Vorrichtung nach Fig. 1 und
- Fig. 3: eine aufgerissene Teilansicht auf die Vorrichtung nach Fig. 2.

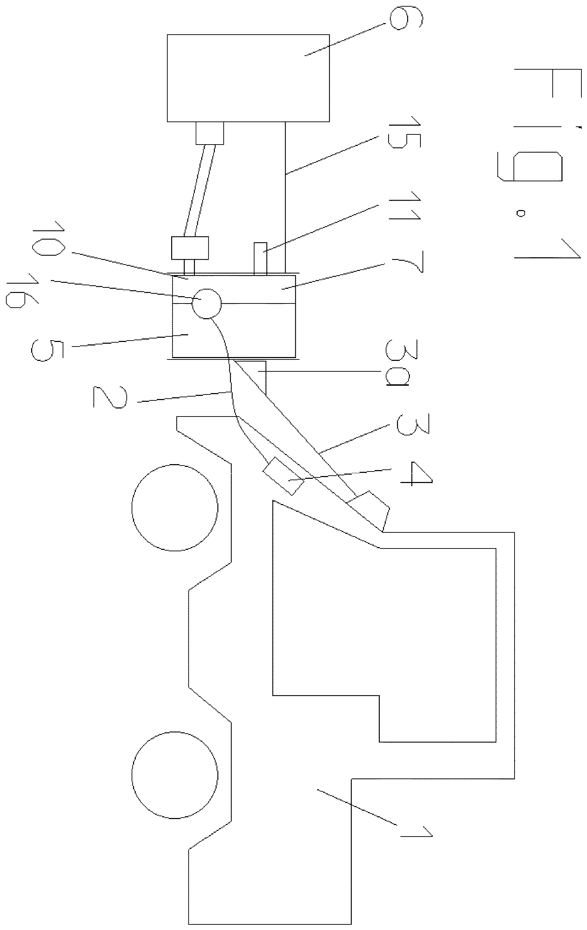

Nach Fig. 1 ist beispielsweise ein als Fahrzeug, etwa als Radlader, ausgebildetes Arbeitsgerät 1 dargestellt, das einen hydraulischen Arbeitskreis 2 aufweist - beispielsweise, um damit eine Hubeinrichtung 3 anzutreiben. Hierzu weist das Arbeitsgerät 1 eine angetriebene Hydraulikpumpe 4 auf. Der Hubrahmen 3a der Hubeinrichtung 3 trägt eine Vorrichtung 5 und ein Anbaugerät 6 - wie in Fig. 1 zu erkennen.

Die Vorrichtung 5 treibt das Anbaugerät 6 an und weist hierzu erfindungsgemäß ein Verteilergetriebe 7 auf. Dazu weist das Verteilergetriebe 7 ein Getriebegehäuse 8, eine Eingangswelle 9, eine erste Abtriebswelle 10, eine zweite Abtriebswelle 11 und mindestens eine - im Ausführungsbeispiel zwei - Getriebestufen 12, 13 zwischen der Eingangswelle 9 und den beiden Abtriebswellen 10, 11 auf. Die Getriebestufen 12, 13 sind im Getriebegehäuse 8 gelagert.

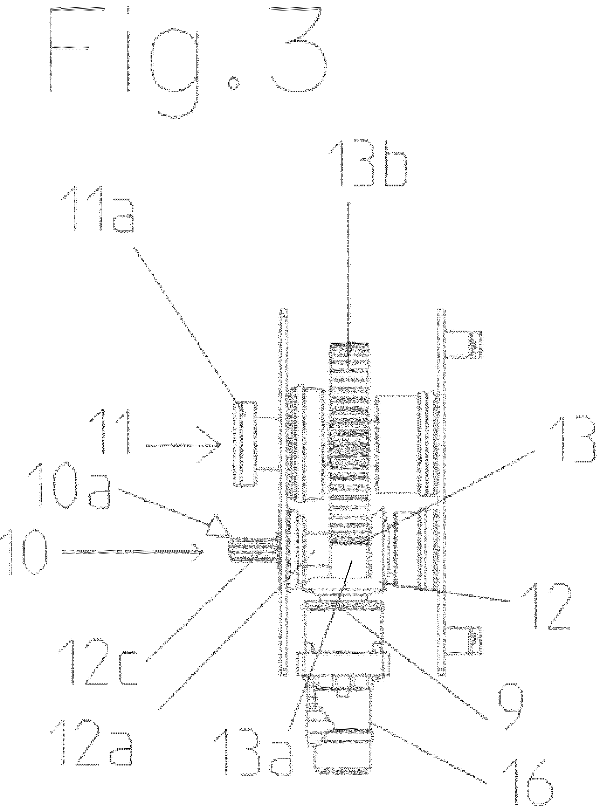

Damit ist die Vorrichtung 5 flexibel einsetzbar, ohne eine Beschädigung am Antrieb 4 des Arbeitsgeräts 1 befürchten zu müssen. Die Vorrichtung 5 weist nämlich einen Hydraulikantrieb 16 auf, der an den Antriebskreis 2 des Arbeitsgeräts 1 angeschlossen ist und der mit der Eingangswelle 9 des Verteilergetriebes 7 zu deren Antrieb verbunden ist - wie in Fig. 3 zu erkennen.

Zudem sind am Getriebegehäuse 8 zwei mechanische Anbauschnittstellen 14, 15 vorgesehen. Das Getriebegehäuse 8 nimmt daher die mechanischen Lasten dieser ersten und zweiten Anbauschnittstellen 14, 15 direkt auf.

Die erste Anbauschnittstelle 14 ist als Plattenkupplung, die zweite Anbauschnittstelle 15 als Dreipunktkupplung ausgeführt. Über die erste Anbauschnittstelle 14 ist die Vorrichtung 5 an das Arbeitsgerät 1 angekoppelt. Über die zweite Anbauschnittstelle 15 ist ein Anbaugerät 6 an der Vorrichtung 5 angekoppelt. Dadurch, dass sich die beiden Anbauschnittstellen 14, 15 am Getriebegehäuse 8 gegenüberliegen, ist diese Vorrichtung 5 auch einfach handhabbar.

Wie in Fig. 3 zu erkennen, ist die erste Abtriebswelle 10 als Zapfwelle 10a ausgebildet. Die zweite Abtriebswelle 11 weist einen Abtriebsflansch 11a auf und kann damit als multifunktionaler Antrieb für verschiedenste Anbaugerät 6 zu deren Direktantrieb verwendet werden. Im Allgemeinen erwähnt, kann ein derartiges Arbeitsgerät 6 beispielsweise ein direkt angetriebener Erdbohrer, Holzspalter, Mischtrommel, etc. sein.

Die beiden Abtriebswellen 10, 11 weisen eine unterschiedliche Drehzahl n1, n2 auf. Dies, weil ein erstes Übersetzungsverhältnis i1 zwischen Eingangswelle 9 und erster Abtriebswelle 10 unterschiedlich zu einem zweiten Übersetzungsverhältnis i2 zwischen Eingangswelle 9 und zweiter Abtriebswelle 11 ist. Zudem ist das erste Übersetzungsverhältnis i1 > dem zweiten Übersetzungsverhältnis i2.

Die erste Abtriebswelle 10 ist über die erste Getriebestufe 12 unmittelbar, die zweite Abtriebswelle 11 ist über die zweite Getriebestufe 13 unmittelbar angetrieben. Die erste Getriebestufe 12 ist als Kegelradgetriebe, die zweite Getriebestufe 13 ist als Zahnradgetriebe ausgebildet - wie in Fig. 3 zu erkennen.

Ein Eingangszahnrad 13a des Zahnradgetriebes ist als Ritzel auf einer ersten Ausgangswelle 12a, nämlich Ritzelwelle, des Kegelradgetriebes ausgeführt. Zudem weist die erste Ausgangswelle 12a an einem freien Ende ein Zapfwellenprofil 12c auf und bildet damit die Zapfwelle 10a der ersten Abtriebswelle 10 aus.

Ein Ausgangszahnrad 13b der zweiten Getriebestufe 13 ist auf einer zweiten Ausgangswelle befestigt. An einem freien Ende der Ausgangswelle ist der Abtriebsflansch 11a der zweiten Abtriebswelle 11 vorgesehen.

Das Getriebegehäuse 8 weist zwei über einen randseitigen Flansch 17a, 17b miteinander verbundene Gehäuseteile 8a, 8b auf. Am Mantel des Getriebegehäuses 8 sind parallel verlaufende Versteifungsrippen 18 vorgesehen. An den die Anbauschnittstellen 14, 15 tragenden Stirnseiten des Getriebegehäuses 8 sind jeweils eine Platte 19a, 19b vorgesehen.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Vorrichtung zum Antrieb zumindest eines Anbaugeräts (6) an einem, einen hydraulischen Arbeitskreis (2) aufweisenden Arbeitsgerät (1), insbesondere Arbeitsfahrzeug, mit einer ersten und zweiten mechanischen Anbauschnittstelle (14, 15), wobei die erste Anbauschnittstelle (14) zum Ankoppeln mit dem Arbeitsgerät (1) und die zweite Anbauschnittstelle (15) zum Ankoppeln mit dem Anbaugerät (6) ausgebildet sind, mit einem Hydraulikantrieb (16), der an den Antriebskreis des Arbeitsgeräts (1) anschließbar ist, und mit einer vom Hydraulikantrieb (16) angetrieben Zapfwelle (10a) zum Antrieb des Anbaugeräts (6), **dadurch gekennzeichnet, dass** die Vorrichtung (5) ein Verteilergetriebe (7) aufweist, das ein Getriebegehäuse (8), eine Eingangswelle (9), eine erste Abtriebswelle (10), eine zweite Abtriebswelle (11) und mindestens eine im Getriebegehäuse (8) gelagerte Getriebestufe (12, 13) zwischen der Eingangswelle (9) und den beiden Abtriebswellen (10, 11) aufweist, und dass der Hydraulikantrieb (16) mit der Eingangswelle (9) des Verteilergetriebes (7) zu deren Antrieb verbunden ist, und dass die erste Abtriebswelle (10) als Zapfwelle (10a) und die zweite Abtriebswelle (11) zum Direktantrieb ausgebildet sind.

2. Vorrichtung nach Anspruch 1, **dadurch gekennzeichnet, dass** die erste und zweite mechanische Anbauschnittstelle (14, 15) am Getriebegehäuse (8) vorgesehen sind und sich am Getriebegehäuse (8) insbesondere gegenüberliegen.

3. Vorrichtung nach einem der Ansprüche 1 bis 2, **dadurch gekennzeichnet, dass** die zweite Abtriebswelle (11) einen Abtriebsflansch (11a) aufweist.

4. Vorrichtung nach einem der Ansprüche 1 bis 3, **dadurch gekennzeichnet, dass** ein erstes Übersetzungsverhältnis zwischen Eingangswelle (9) und erster Abtriebswelle (10) unterschiedlich zu einem zweiten Übersetzungsverhältnis zwischen Eingangswelle (9) und zweiter Abtriebswelle (11) ist.

5. Vorrichtung nach einem der Ansprüche 1 bis 4, **dadurch gekennzeichnet, dass** das Getriebe zwei Getriebestufen (12, 13) aufweist, wobei die erste Abtriebswelle (10) über die erste Getriebestufe (12) unmittelbar und die zweite Abtriebswelle (11) über die zweite Getriebestufe (13) unmittelbar angetrieben werden.

6. Vorrichtung nach Anspruch 5, **dadurch gekennzeichnet, dass** die erste Getriebestufe (12) ein Kegelradgetriebe und/oder die zweite Getriebestufe (13) ein Zahnradgetriebe ist oder sind.

7. Vorrichtung nach Anspruch 6, **dadurch gekennzeichnet, dass** sich ein Eingangszahnrad (13a) des Zahnradgetriebes auf einer ersten Ausgangswelle (12a) des Kegelradgetriebes befindet.

8. Vorrichtung nach Anspruch 7, **dadurch gekennzeichnet, dass** ein Ritzel der als Ritzelwelle ausgeführten ersten Ausgangswelle (12a) das Eingangszahnrad (13a) ausbildet.

9. Vorrichtung nach einem der Ansprüche 5 bis 8, **dadurch gekennzeichnet**, die erste Ausgangswelle (12a) an einem ihrer, insbesondere freien, Enden ein Zapfwellenprofil aufweist und damit die Zapfwelle (10a) der ersten Abtriebswelle (10) ausbildet.

10. Vorrichtung nach Anspruch 3 und einem der Ansprüche 5 bis 9, **dadurch gekennzeichnet, dass** ein Ausgangszahnrad (13b) des Zahnradgetriebes auf einer zweiten Ausgangswelle befestigt ist, die an einem, insbesondere freien, Ende den Abtriebsflansch (11a) der zweiten Abtriebswelle (11) aufweist.

11. Vorrichtung nach einem der Ansprüche 1 bis 10, **dadurch gekennzeichnet, dass** das Getriebegehäuse (8) zwei miteinander verbundene Gehäuseteile (8a, 8b) aufweist.

12. Vorrichtung nach einem der Ansprüche 1 bis 11, **dadurch gekennzeichnet, dass** das Getriebegehäuse (8) an ihrem Mantel, insbesondere parallel verlaufende, Versteifungsrippen (18) aufweist.

13. Vorrichtung nach einem der Ansprüche 1 bis 12, **dadurch gekennzeichnet, dass** das Getriebegehäuse (8) an ihren Stirnseiten mit den Anbauschnittstellen (14, 15) jeweils eine Platte (19a, 19b) aufweisen.

14. Arbeitsgerät (1), insbesondere Arbeitsfahrzeug, mit einer Vorrichtung (5) nach einem der Ansprüche 1 bis 13.

## Claims

1. Device for driving at least one attachment (6) on a working device (1) having a hydraulic working circuit (2), more particularly a working vehicle, having a first and second mechanical attachment interface (14, 15), wherein the first attachment interface (14) is designed for coupling to the working device (1) and the second attachment interface (15) is designed for coupling to the attachment (6), having a hydraulic drive (16) which can be connected to the drive circuit of the working device (1), and having a power take-off shaft (10a) driven by the hydraulic drive (16) for driving the attachment (6), **characterized in that** the device (5) has a distribution gearbox (7) which has a gearbox housing (8), an input shaft (9), a first output shaft (10), a second output shaft (11) and at least one gear stage (12, 13) mounted in the gearbox housing (8) between the input shaft (9) and the two output shafts (10, 11), and **in that** the hydraulic drive (16) is connected to the input shaft (9) of the distribution gearbox (7) for driving it, and **in that** the first output shaft (10) is designed as a power take-off shaft (10a) and the second output shaft (11) is designed for direct drive.

2. Device according to claim 1, **characterized in that** the first and second mechanical attachment interfaces (14, 15) are provided on the gearbox housing (8) and are located more particularly opposite each other on the gearbox housing (8).

3. Device according to one of claims 1 to 2, **characterized in that** the second output shaft (11) has an output flange (11a).

4. Device according to one of claims 1 to 3, **characterized in that** a first transmission ratio between the input shaft (9) and the first output shaft (10) is different from a second transmission ratio between the input shaft (9) and the second output shaft (11).

5. Device according to one of claims 1 to 4, **characterized in that** the gearbox has two gear stages (12, 13), wherein the first output shaft (10) is driven directly via the first gear stage (12) and the second output shaft (11) is driven directly via the second gear stage (13).

6. Device according to claim 5, **characterized in that** the first gear stage (12) is a bevel gear and/or the second gear stage (13) is a gear transmission.

7. Device according to claim 6, **characterized in that** an input gear (13a) of the gear transmission is located on a first output shaft (12a) of the bevel gear.

8. Device according to claim 7, **characterized in that** a pinion of the first output shaft (12a) designed as a pinion shaft forms the input gear (13a).

9. Device according to one of claims 5 to 8, **characterized in that** the first output shaft (12a) has a power take-off shaft profile at one of its ends, more particularly at the free end, and thus forms the power take-off shaft (10a) of the first output shaft (10).

10. Device according to claim 3 and one of claims 5 to 9, **characterized in that** an output gear (13b) of the gear transmission is fastened to a second output shaft which has the output flange (11a) of the second output shaft (11) at one, more particularly free, end.

11. Device according to one of claims 1 to 10, **characterized in that** the gear housing (8) has two housing parts (8a, 8b) connected to each other.

12. Device according to one of claims 1 to 11, **characterized in that** the gearbox housing (8) has stiffening ribs (18) on its shell, more particularly ribs extending in parallel.

13. Device according to one of claims 1 to 12, **characterized in that** the gearbox housing (8) has a plate (19a, 19b) on each of its end faces with the attachment interfaces (14, 15).

14. Working device (1), more particularly working vehicle, having a device (5) according to one of claims 1 to 13.

## Revendications

1. Dispositif pour l'entraînement d'au moins un outil porté (6) sur un engin (1) comportant un circuit de travail hydraulique (2), en particulier un véhicule de chantier, avec une première interface mécanique de montage et une deuxième (14, 15), la première interface de montage (14) étant conçue pour le couplage avec l'engin (1) et la deuxième interface de montage (15) pour le couplage avec l'outil porté (6), avec un entraînement hydraulique (16) qui peut être raccordé au circuit d'entraînement de l'engin (1) et avec un arbre de prise de force (10a) entraîné par l'entraînement hydraulique (16) pour entraîner l'outil porté (6), **caractérisé en ce que** le dispositif (5) comporte un engrenage distributeur (7) qui comporte un carter d'engrenage (8), un arbre d'entrée (9), un premier arbre de sortie (10), un deuxième arbre de sortie (11) et au moins un étage d'engrenage (12, 13) supporté dans le carter d'engrenage (8) entre l'arbre d'entrée (9) et les deux arbres de sortie (10, 11) et **en ce que** l'entraînement hydraulique (16) est relié à l'arbre d'entrée (9) de l'engrenage distributeur (7) pour entraîner celui-ci et **en ce que** le premier arbre de sortie (10) est conformé comme un arbre de prise de force (10a) et le deuxième arbre de sortie (11) en vue d'un entraînement direct.

2. Dispositif selon la revendication 1, **caractérisé en ce que** la première interface de montage mécanique et la deuxième (14, 15) sont prévues sur le carter d'engrenage (8) et, en particulier, se font face sur le carter d'engrenage (8).

3. Dispositif selon l'une des revendications 1 à 2, **caractérisé en ce que** le deuxième arbre de sortie (11) présente un flasque de sortie (11a).

4. Dispositif selon l'une des revendications 1 à 3, **caractérisé en ce qu'**un premier rapport de multiplication entre l'arbre d'entrée (9) et le premier arbre de sortie (10) est différent d'un deuxième rapport de multiplication entre l'arbre d'entrée (9) et le deuxième arbre de sortie (11).

5. Dispositif selon l'une des revendications 1 à 4, **caractérisé en ce que** l'engrenage comporte deux étages d'engrenage (12, 13), le premier arbre de sortie (10) étant entraîné directement par le premier étage d'engrenage (12) et le deuxième arbre de sortie (11) par l'intermédiaire du deuxième étage d'engrenage (13).

6. Dispositif selon la revendication 5, **caractérisé en ce que** le premier étage d'engrenage (12) est un engrenage à pignons coniques et/ou le deuxième étage d'engrenage (13) un engrenage à roues dentées.

7. Dispositif selon la revendication 6, **caractérisé en ce qu'**une roue dentée d'entrée (13a) de l'engrenage à roues dentées se trouve sur un premier arbre de sortie (12a) de l'engrenage à pignons coniques.

8. Dispositif selon la revendication 7, **caractérisé en ce qu'**un pignon du premier arbre de sortie (12a) réalisé comme un arbre de pignon forme la roue dentée d'entrée (13a).

9. Dispositif selon l'une des revendications 5 à 8, **caractérisé en ce que** le premier arbre de sortie (12a) présente un profil d'arbre de prise de force à une de ses extrémités, en particulier une extrémité libre, et forme avec celui-ci l'arbre de prise de force (10a) du premier arbre de sortie (10).

10. Dispositif selon la revendication 3 et une des revendications 5 à 9, **caractérisé en ce qu'**une roue dentée de sortie (13b) de l'engrenage à roue dentée est fixée à un deuxième arbre de sortie qui présente à une extrémité, en particulier une extrémité libre, le flasque de sortie (11a) du deuxième arbre de sortie (11).

11. Dispositif selon l'une des revendications 1 à 10, **caractérisé en ce que** le carter d'engrenage (8) comporte deux parties de carter (8a, 8b) reliées l'une à l'autre.

12. Dispositif selon l'une des revendications 1 à 11, **caractérisé en ce que** le carter d'engrenage (8) présente sur son enveloppe des nervures raidisseuses (18), en particulier parallèles.

13. Dispositif selon l'une des revendications 1 à 12, **caractérisé en ce que** le carter d'engrenage (8) comporte une plaque (19a, 19b) sur chacune de ses faces d'extrémité présentant les interfaces de montage (14, 15).

14. Engin (1), en particulier véhicule de chantier, muni d'un dispositif (5) selon l'une des revendications 1 à 13.
